# EUROPEAN PATENT APPLICATION

(11) **EP 2 537 881 A1**
(43) Date of publication of application: **26.12.2012**
(21) Application number: 11742350.9
(22) Date of filing: 15.02.2011
(51) Int. Cl.: C08J 5/04, B29C 43/02, B29C 43/34, B29C 70/06, B32B 5/28, D01F 8/06, B29K 101/12, B29K 105/08

(54) **SHEET FOR FIBER-REINFORCED RESIN AND FIBER-REINFORCED RESIN MOLDED ARTICLE USING SAME**

(30) Priority: 06.07.2010 JP 2010153927; 15.02.2010 JP 2010030335
(71) Applicant: Kurashiki Boseki Kabushiki Kaisha, Kurashiki-shi Okayama 710-0054 (JP)
(72) Inventor: KASUYA Akira, Osaka 572-0823 (JP); MIHARA Ayako, Osaka 572-0823 (JP)
(74) Representative: de Bresser, Sara Jean
(86) International application number: PCT/JP2011/053075
(87) International publication number: WO 2011/099611

(57) **Abstract**

A sheet for a fiber-reinforced resin according to the present invention includes a conjugate fiber yarn that contains a low melting point polymer component of a thermoplastic synthetic resin and a high melting point polymer component of a thermoplastic synthetic resin. The low melting point polymer component and the high melting point polymer component are polymers of the same type. When the sheet is formed into a fiber-reinforced resin molded article, the low melting point polymer component serves as a matrix resin, while the high melting point polymer component serves as a reinforcing fiber. The sheet is arranged in at least one direction to form a monolayer or a multilayer. A.fiber-reinforced resin molded article according to the present invention is obtained by heating the sheet for a fiber-reinforced resin according to the present invention to a temperature equal to or higher than the melting point of the low melting point polymer component and lower than the melting point of the high melting point polymer component, followed by compression molding. The present invention can provide a sheet for a fiber-reinforced resin that allows the fiber-reinforced resin to be composed of a thermoplastic synthetic resin, provides good adhesion between a reinforcing fiber and a matrix resin, can include a higher proportion of the reinforcing fiber, and has excellent physical properties such as strength, and a fiber-reinforced resin molded article using the same.

## Description

### Technical Field

The present invention relates to a sheet for a fiber-reinforced resin composed of a conjugate fiber yarn that contains a high melting point polymer component of a thermoplastic synthetic resin and a low melting point polymer component of a thermoplastic synthetic resin, and a fiber-reinforced resin molded article using the same.

### Background Art

Plastics are used for the interiors of automobiles, airplanes, vehicles, and the like, and they are lightweight as compared with metal. Since plastics alone have an insufficient strength, short glass fibers (cut to a certain length) are mixed with the plastics. However, when such a mixture is disposed of and burned in an incinerator, the plastics are decomposed into CO₂ and water, whereas the glass is melted to become solid and adheres to the inside of the incinerator. It is feared that, for example, this significantly shortens the life of the incinerator. As a material having a strength as high as glass, carbon fibers are known, but these are expensive and thus are not suitable for practical use.

As a solution to these problems, an emulsion resin, a thermosetting resin, a thermoplastic resin, or the like, which serves as a matrix resin, is impregnated in and applied to a fiber having a relatively high melting point, such as an aramid fiber, a polyphenylene sulfide (PPS) fiber, and a polyester fiber, which serves as a reinforcing fiber, followed by integral extrusion molding, film lamination molding, or the like, thereby obtaining a high-strength sheet.

Patent Document 1 proposes, as a sheet for a printed board for electronic equipment, a flexible board sheet obtained by forming a woven fabric using a conjugate fiber made of a thermotropic liquid crystal polymer as a core component and polyphenylene sulfide (PPS) as a sheath component, followed by press molding. Patent Documents 2 and 3 propose a fiber-reinforced resin using a natural fiber as a reinforcing fiber. Patent Document 2 describes a fiber-reinforced resin using a short flax fiber processed into a nonwoven fabric, a woven fabric, or a knitted fabric. Patent Document 3 describes a fiber-reinforced resin using a short kenaf fiber processed into a nonwoven fabric or a woven fabric.

### Prior Art Document

### Patent Document

Patent Document 1: JP 5(1993)-44146 A
Patent Document 2: JP 2004-143401 A
Patent Document 3: JP 2004-149930 A

### Disclosure of Invention

### Problem to be Solved by the Invention

However, each of the fiber-reinforced resins proposed in Patent Documents 1 to 3 has a problem that the reinforcing fiber and a matrix resin, which are of different varieties from each other, have poor adhesion to each other when formed into a molded article. In addition, according to Patent Documents 2 and 3, the short fiber such as a flax fiber and a kenaf fiber processed into a nonwoven fabric, a woven fabric, or a knitted fabric is melt-mixed or impregnated with a resin so as to form a fiber-reinforced plastic (FRP). Thus, it is difficult for the resin to permeate into the fiber. As a result, a large-scale apparatus is required, and the molding is not easy. In particular, since natural fibers have a lower decomposition temperature than glass fibers and carbon fibers, a thermoplastic resin that serves as a matrix resin cannot be heated to have a viscosity sufficient to permeate easily, resulting in low permeability.

In order to solve the above-described conventional problems, the present invention provides a sheet for a fiber-reinforced resin and a fiber-reinforced resin molded article that can include a higher proportion of reinforcing fiber, provide good adhesion between the reinforcing fiber and a matrix resin, and have excellent physical properties such as strength.

### Means for Solving Problem

A sheet for a fiber-reinforced resin according to the present invention includes a conjugate fiber yarn that contains a low melting point polymer component of a thermoplastic synthetic resin and a high melting point polymer component of a thermoplastic synthetic resin. The low melting point polymer component and the high melting point polymer component are polymers of the same type. When the sheet is formed into a fiber-reinforced resin molded article, the low melting point polymer component serves as a matrix resin, while the high melting point polymer component serves as a reinforcing fiber. The sheet is arranged in at least one direction to form a monolayer or a multilayer.

A fiber-reinforced resin molded article according to the present invention is obtained by subjecting the sheet for a fiber-reinforced resin according to the present invention to heat and pressure molding at a temperature equal to or higher than the melting point of the low melting point polymer component and lower than the melting point of the high melting point polymer component. Further, it is preferable that the fiber-reinforced resin molded article according to the present invention is obtained by allowing the sheet for a fiber-reinforced resin to adhere to a resin foam sheet and subjecting the sheet for a fiber-reinforced resin to heat and pressure molding at a temperature equal to or higher than the melting point of the low melting point polymer component and lower than the melting point of the high melting point polymer component.

### Effects of the Invention

The present invention can provide a sheet for a fiber-reinforced resin that allows the fiber-reinforced resin to be composed of a thermoplastic synthetic resin, provides good adhesion between a reinforcing fiber and a matrix resin, can include a higher proportion of the reinforcing fiber, and has excellent physical properties such as strength, and a fiber-reinforced resin molded article using the same.

Further, the present invention can provide a fiber-reinforced resin molded article that is lightweight, has excellent physical properties such as strength, and is easily recycled and disposed of, by subjecting the sheet for a fiber-reinforced resin to heat and pressure molding at a temperature equal to or higher than the melting point of a low melting point polymer component and lower than the melting point of a high melting point polymer component. In particular, the fiber-reinforced resin molded article is suitable as interior materials for automobiles, vehicles, ships, houses, and the like.

### Brief Description of Drawings

[FIGs. 1A to1C] FIGs. 1A to 1C are cross-sectional views of exemplary conjugate fibers for use in the present invention.
[FIG. 2] FIG. 2 is a perspective view of a reed screen-like sheet in an example of the present invention.
[FIG. 3] FIG. 3 is a schematic perspective view of a multiaxial warp knitted fabric in an example of the present invention.
[FIG. 4] FIG. 4 is a perspective view showing a heat and pressure treatment (pretreatment) in an example of the present invention.
[FIGs. 5A and 5B] FIG. 5A is a cross-sectional view of a sheet for use in the present invention before being subjected to the heat and pressure treatment, and FIG. 5B is a cross-sectional view of the sheet obtained after the heat and pressure treatment.
[FIGs. 6A to 6C] FIGs. 6A to 6C are schematic perspective views showing an exemplary process for manufacturing a fiber-reinforced resin molded article in an embodiment of the present invention.
[FIGs. 7A to 7C] FIGs. 7A to 7C are schematic perspective views showing an exemplary process for manufacturing a fiber-reinforced resin molded article in another embodiment of the present invention.
[FIGs. 8A to 8C] FIGs. 8A to 8C are cross-sectional views showing an exemplary compression molding process for manufacturing an interior material for a vehicle using the fiber-reinforced resin molded article of the present invention.
[FIG. 9] FIG. 9 is a cross-sectional view of a fiber-reinforced resin molded article in an example of the present invention.
[FIG. 10] FIG. 10 is a cross-sectional view of a fiber-reinforced resin molded article in another example of the present invention.

### Description of the Invention

A sheet for a fiber-reinforced resin according to the present invention includes a conjugate fiber that contains a low melting point polymer component of a thermoplastic synthetic resin and a high melting point polymer component of a thermoplastic synthetic resin. The conjugate fiber as used herein refers to a fiber obtained as follows, for example: a plurality of polymer components guided individually to a spinneret are combined and extruded from the spinneret, followed by drawing. Examples of the structure of the conjugate fiber include a core-sheath structure, a sea-island structure, a side-by-side structure, and the like, and any structure is available. The conjugate fiber may be a filament yarn or a spun yarn composed of a fiber made of a high melting point polymer component and a fiber made of a low melting point component.

As the low melting point polymer component and the high melting point polymer component, polymers of the same type are selected. The polymers of the same type refer to polymers composed of the same components such as polyolefins, polyesters, and polyamides. These polymer components may be selected not only from homopolymers but also from copolymers (including multi-component copolymers such as binary copolymers and ternary copolymers). Polyolefin is a polymer or a copolymer of a hydrocarbon of ethylene series, such as polyethylene, polypropylene, polybutene, and copolymers thereof. Polyamide, which generally is referred to as nylon, is a linear synthetic polymer having an amide bond, and nylon 66, nylon 6,10, nylon 6, nylon 11, and nylon 12 have been commercialized. Polyester is a generic name for polymers having an ester bond in a main chain. Examples thereof include polycarbonate, an unsaturated polyester resin, an alkyd resin, and the like.

The selection of polymers is made so as to allow the low melting point polymer component and the high melting point polymer component to serve as a matrix resin and a reinforcing fiber, respectively, when a fiber-reinforced resin molded article is formed. The matrix resin also is called a base resin. The matrix resin and the reinforcing fiber form fiber-reinforced plastics (FRP).

The sheet for a fiber-reinforced resin is arranged in at least one direction to form a monolayer or a multilayer and preferably is connected with a stitching yarn. In the case of a monolayer, the sheet takes a reed screen-like form. In the case of a multilayer, the sheet forms a multiaxial warp knitted fabric. Herein, "connection" is intended to keep the sheet in shape so as to prevent a plurality of the conjugate fibers that are aligned in parallel to form the sheet from coming apart in the case of a monolayer, or to keep the sheet in shape so as to prevent layers, in addition to the conjugate fibers as above, from coming apart in the case of a multilayer. The sheet can be kept in shape by thermal adhesion without using a stitching yarn.

The conjugate fiber preferably contains the high melting point polymer component in a range of 50 to 90 mass% and the low melting point polymer component in a range of 10 to 50 mass%. When the respective polymer components are within these ranges, a higher proportion of the reinforcing fiber can be included, thereby increasing strength and easily balancing the matrix resin and the reinforcing fiber when they form FRP.

A difference in melting point between the low melting point polymer component and the high melting point polymer component of the conjugate fiber is preferably 20°C or more and more preferably 30°C or more. With a difference in melting point of 20°C or more, the high melting point polymer easily functions as the reinforcing fiber, while the low melting point polymer component easily functions as the matrix resin when the sheet is subjected to compression molding.

Both the low melting point polymer component and the high melting point polymer component of the conjugate fiber are preferably at least one selected from polyolefin and an olefin copolymer. An olefin-based polymer is lightweight, is excellent in strength and durability, and is easily recycled and disposed of when no longer needed. For example, it is preferable that the high melting point polymer component is polypropylene, and the low melting point polymer component is polyethylene. The specific gravity of polypropylene, which varies depending on the manufacturing method, is generally 0.902 to 0.910. The specific gravity of polyethylene, which also varies depending on the manufacturing method, is generally 0.910 to 0.970. Thus, the specific gravity of the conjugate fiber using polypropylene as the high melting point polymer component and polyethylene as the low melting point polymer component is in a range of about 0.9 to 0.95. On the other hand, a conventional glass fiber and a carbon fiber have a specific gravity of about 2.5 and about 1.7, respectively In view of this, the conjugate fiber of the present invention has an extremely low specific gravity.

The sheet for a fiber-reinforced resin is preferably a reed screen-like sheet or a multiaxial warp knitted fabric, because this allows the sheet to have high fiber orientation. The preferable mass per unit area and thickness of the sheet for a fiber-reinforced resin for use in the present invention are not limited particularly. The mass per unit area of one layer is about 10 to 150 g/m², and the mass per unit area of the sheet as a whole is about 10 to 600 g/m². The thickness of one layer is about 0.1 to 0.5 mm, and the thickness of the sheet as a whole is about 0.2 to 2 mm.

The stitching yarn for use in the present invention can be a polypropylene yarn, a polyethylene yarn, a polyester yarn, or the like, and preferably is composed of a fiber made of a polymer of the same type as the low melting point polymer component and the high melting point polymer component. For example, in the case where the high melting point polymer component is polypropylene, and the low melting point polymer component is polyethylene, the stitching yarn is preferably a polypropylene yarn or a conjugate yarn containing polypropylene as a core component and polyethylene as a sheath component. In the case where no stitching yarn is used, or the case where only the low melting point polymer component is contained, the arrangement may be disturbed in a reinforcing fiber portion when heat is applied during thermal compression molding, which may result in a molded article having a nonuniform strength. This phenomenon is observed especially when a molded article with a very uneven surface is manufactured, i.e., when deep drawing molding is performed. In order to prevent such nonuniformity, it is preferable to use a stitching yarn whose melting point is as high as that of the high melting point polymer component or is about 20°C higher than that of the low melting point polymer component. The stitching method may be a chain stitch, a tricot stitch, or the like.

The sheet for a fiber-reinforced resin preferably is subjected to heat and pressure molding (hereinafter, also referred to as a pretreatment). It is advantageous to perform the heat and pressure molding because it allows the low melting point polymer to be softened or melted into a flat form, so that the sheet can be cut without coming apart in a cut section, thereby ensuring excellent integrity. In addition, the high melting point polymer component is arranged densely, resulting in improved strength.

A fiber-reinforced resin molded article according to the present invention can be obtained by subjecting the sheet for a fiber-reinforced resin to heat and pressure molding at a temperature equal to or higher than the melting point of the low melting point polymer component and lower than the melting point of the high melting point polymer component. Consequently, it is possible to provide a fiber-reinforced resin molded article that is lightweight, has excellent physical properties such as strength, and is easily disposed of The fiber-reinforced resin molded article of the present invention is particularly suitable as an interior material for the ceiling of an automobile, an interior material for a door, and the like. The compression molding for use in the present invention may be heat roller press molding in which the sheet is allowed to pass between heat rollers, but is generally press molding that uses a mechanism that raises or lowers a mold or a heating plate using a cam, a toggle, pneumatic or oil pressure, or the like, thereby forming the sheet into a desired shape. Press molding also can be used in applications where deep drawing molding is required, such as a molded ceiling and a door trim. Press molding can be performed in combination with vacuum molding or decompression molding.

In the compression molding, it is preferable to allow the sheet for a fiber-reinforced resin of the present invention to adhere to a resin foam sheet so that they are molded integrally Examples of the resin foam sheet include polyurethane foam, polyolefin foam, and the like. Polyolefin foam is preferably polypropylene foam. The resin foam sheet preferably is made of a thermoplastic resin of the same type as the sheet for a fiber-reinforced resin. The reason for this is as follows. Due to the heat applied during the compression molding, the low melting point component of the sheet for a fiber-reinforced resin functions as an adhesive, so that the sheet for a fiber-reinforced resin and the resin foam sheet can adhere integrally to each other without using an additional adhesive. In the case where the sheet for a fiber-reinforced resin is molded integrally with foam of a different variety such as polyurethane foam, or the case where higher adhesiveness is required, it is preferable to additionally provide an adhesive or an adhesion layer such as a hot melt film. In particular, a hot melt film can adhere concurrently during the compression molding. The method of integral molding with a resin foam sheet by adhesion is also called a stampable molding method or a stamping method. The expansion ratio of the resin foam sheet may be selected arbitrarily depending on the purpose, and is preferably 10 to 100 times in the case of an interior material for an automobile. In particular, in the case of polyolefin foam, the expansion ratio is preferably about 15 to 60 times. Further, the thickness of the resin foam sheet is generally about 1 to 300 mm. In particular, in the case of an interior material for a vehicle, the thickness of the resin foam sheet is about 2 to 15 mm, and in particular 2 to 10 mm in consideration of lightness and formativeness.

The mass per unit area of the fiber-reinforced resin molded article according to the present invention is preferably 1 kg/m² or less, more preferably 0.8 kg/m² or less, and further preferably 0.5 kg/m² or less in consideration of lightness. Further, the bending elastic gradient is preferably 30 N/cm or more, more preferably 50 N/cm or more, and further preferably 80 N/cm or more taking into consideration the resistance to deformation. In the present invention, the bending elastic gradient refers to a resistance to a load applied in a thickness direction, and is measured as follows, for example. Initially, a three-point bending test is performed on a specimen having a width of 50 mm and a length of 150 mm according to JIS K 7221-2 at a test rate of 50 mm/min with a span length of 100 mm. Then, using a load (N)-deflection (cm) curve thus obtained, the elastic gradient (N/cm) is calculated from a tangent to the curve at a point where the curve has the largest gradient.

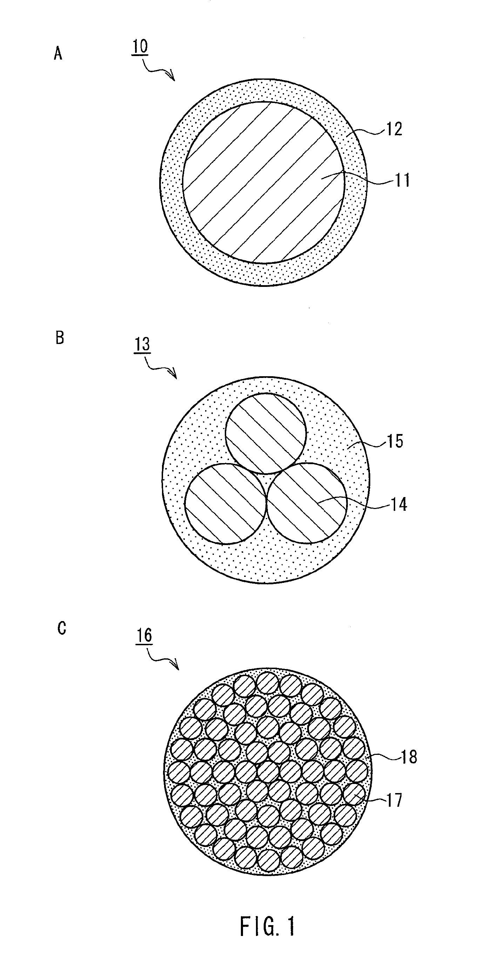

Hereinafter, a description will be given with reference to the drawings. FIGs. 1A to 1C are cross-sectional views of exemplary conjugate fibers for use in the present invention. In FIG.1A, a conjugate fiber 10 is made of a core component 11 that is a high melting point polymer of a thermoplastic synthetic resin and a sheath component 12 therearound that is a low melting point polymer of a thermoplastic synthetic resin. In FIG. 1B, a conjugate fiber 13 is made of a plurality of island components 14 that are high melting point polymers of a thermoplastic synthetic resin and a sea component 15 therearound that is a low melting point polymer of a thermoplastic synthetic resin. In FIG.1C, a conjugate fiber 16 is made of a number of island components 17 that are high melting point polymers of a thermoplastic synthetic resin and a sea component 18 therearound that is a low melting point polymer of a thermoplastic synthetic resin.

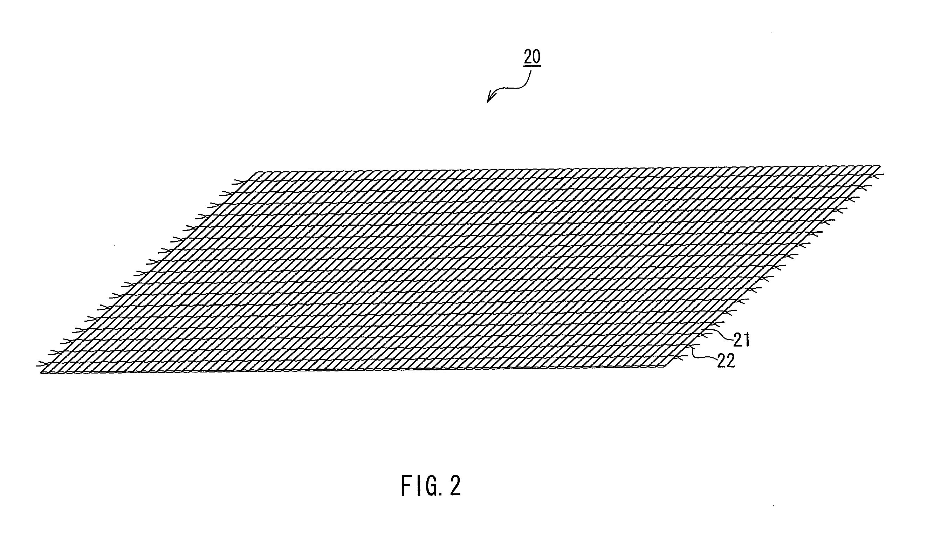

FIG. 2 is a perspective view of a reed screen-like sheet 20 in an example of the present invention. The reed screen-like sheet 20 is composed of conjugate fibers 21 arranged in one direction and stitching yarns 22 that connect the conjugate fibers 21. Since the conjugate fibers 21 are arranged in one direction, the sheet has a higher strength in the direction in which the fibers are arranged, as compared with a woven fabric and a knitted fabric. The reed screen-like sheet 20 may be used to form a monolayer or a multilayer. In the case of a multilayer, it is preferable to arrange the conjugate fibers 21 in multiple directions so as to achieve balanced strength.

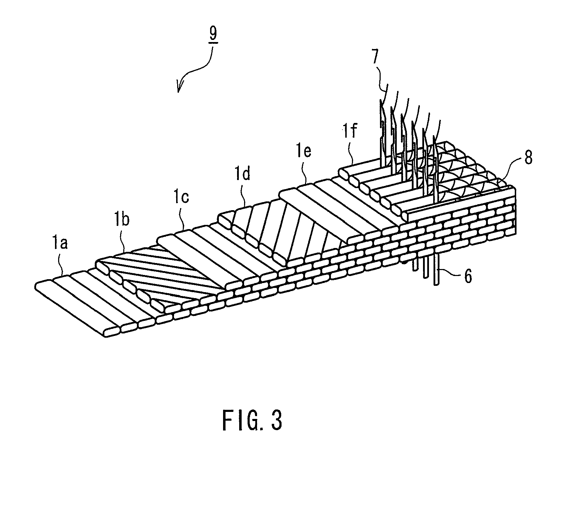

FIG. 3 is a schematic perspective view of a multiaxial warp knitted fabric in an example of the present invention. Conjugate fiber yarns 1a to 1f respectively arranged in a plurality of directions form respective sheets, which are stitched (bound) in a thickness direction with stitching yarns 7 and 8 threaded through a knitting needle 6 so as to be integrated. It is preferable that such a multiaxial warp knitted fabric 9 is subjected to a heat and pressure treatment (pretreatment) as a fiber-reinforced resin intermediate. With this multiaxial warp knitted fabric 9, it is possible to provide fiber-reinforced plastics having an excellent strengthening effect in multiple directions. The stitching yarns 7 and 8 may be replaced by or used in combination with a thermal adhesive yarn or a binder such as a hot melt film.

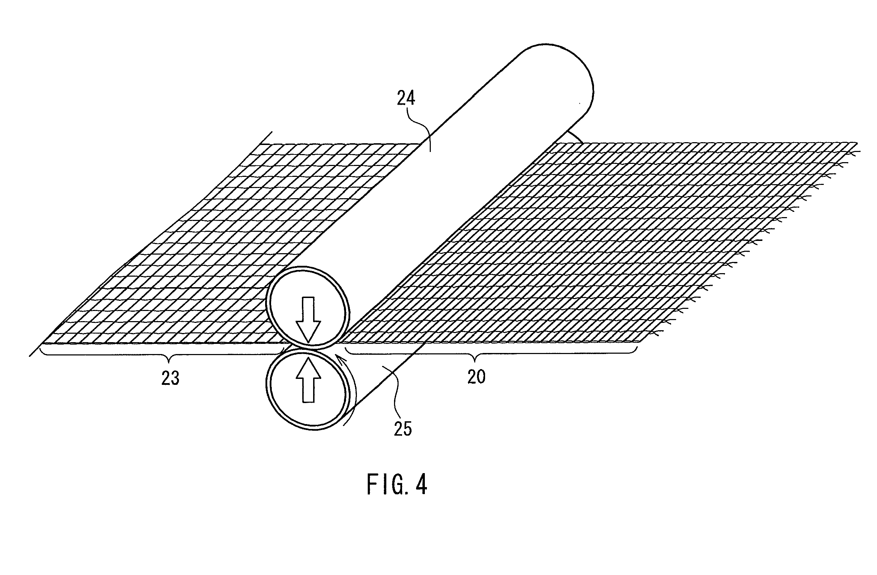

FIG. 4 is a perspective view showing a heat and pressure treatment (pretreatment) in an example of the present invention. The reed screen-like sheet 20 is allowed to pass between a pair of pressure rollers 24 and 25, resulting in a roll formed sheet 23. This treatment allows the low melting point polymer component to be softened or melted into a flat form, so that the sheet can be cut without coming apart in a cut section, thereby ensuring excellent integrity. In addition, the high melting point polymer component is arranged densely, resulting in improved strength. In the case where the high melting point polymer component of the conjugate fibers is polypropylene, and the low melting point polymer component is polyethylene, heat and pressure is applied under the following conditions: the temperature is preferably 120°C to 140°C and more preferably 125°C to 135°C, and the pressure is preferably 0.1 to 10 MPa and more preferably about 0.5 to 5 MPa.

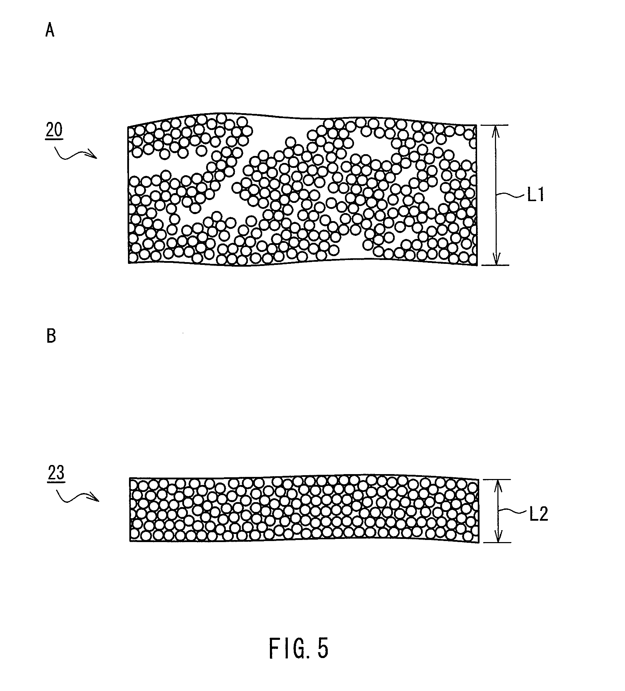

FIG. 5A is a cross-sectional view of the sheet for a fiber-reinforced resin before being subjected to the heat and pressure treatment (pretreatment), and FIG. 5B is a cross-sectional view of the sheet obtained after the heat and pressure treatment (pretreatment). The roll formed sheet 23 obtained after the treatment has a thickness L2 that is smaller than a thickness L1 of the reed screen-like sheet 20 before the treatment. The reinforcing fibers before the treatment are sparse in cross sections, causing the sheet to be bulky, whereas the reinforcing fibers after the treatment are arranged densely.

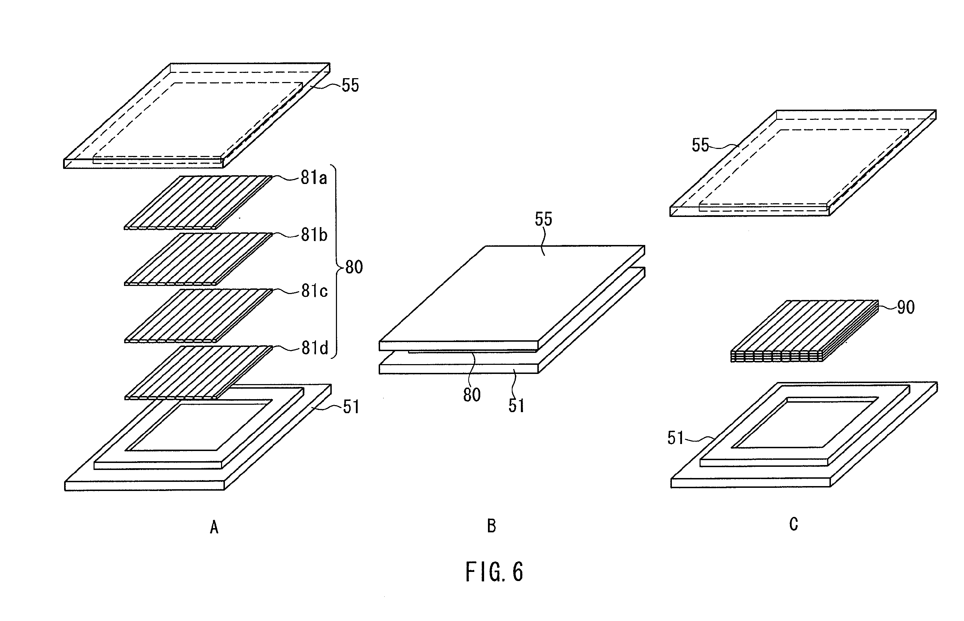

FIGs. 6A to 6C are views showing a process for manufacturing a fiber-reinforced resin molded article in an embodiment of the present invention. Initially, as shown in FIG. 6A, sheets 81a to 81d for a fiber-reinforced resin are stacked on a lower mold 51 in the same direction to form a laminate 80, on which an upper mold 55 is arranged, followed by pressing with a hot press machine and then further pressing with a cold press machine. In this manner, the laminate 80 is subjected to compression molding so as to be integrated as shown in FIG. 6B. Then, as shown in FIG. 6C, a resultant fiber-reinforced rein molded article 90 is removed from the molds. The compression molding can be performed under the following conditions. For example, the hot pressing is performed at a temperature of 125°C to 140°C and a molding pressure of 0.1 to 4 MPa for a molding time of 30 to 300 seconds, and the cold pressing is performed at a temperature of 25°C to 40°C and a molding pressure of 0.1 to 4 MPa for a molding time of 30 to 300 seconds.

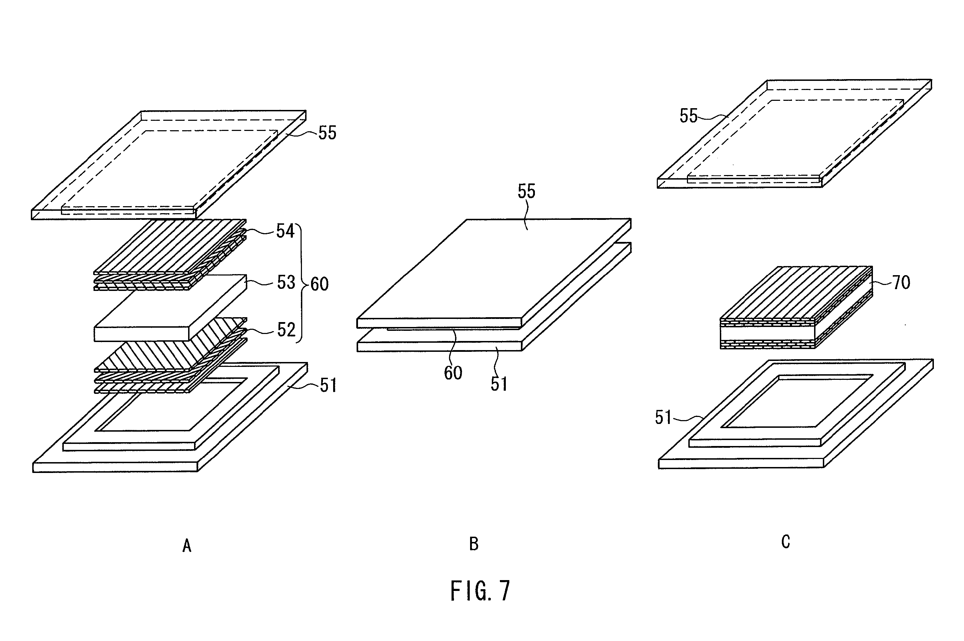

FIGs. 7A to 7C are views showing a process for manufacturing a fiber-reinforced resin molded article in another embodiment of the present invention. Initially, as shown in FIG. 7A, a sheet 52 for a fiber-reinforced resin, a resin foam sheet 53, and a sheet 54 for a fiber-reinforced resin are laminated in this order on the lower mold 51 to form a laminate 60, on which the upper mold 55 is arranged, followed by pressing with a hot press machine and then further pressing with a cold press machine. In this manner, the laminate 60 is subjected to compression molding so as to be integrated as shown in FIG. 7B. Then, as shown in FIG. 7C, a resultant fiber-reinforced rein molded article 70 is removed from the molds. The compression molding can be performed under the following conditions. For example, the hot pressing is performed at a temperature of 125°C to 140°C and a molding pressure of 0.1 to 4 MPa for a molding time of 30 to 300 seconds, and the cold pressing is performed at a temperature of 25°C to 40°C and a molding pressure of 0.1 to 4 MPa for a molding time of 30 to 300 seconds.

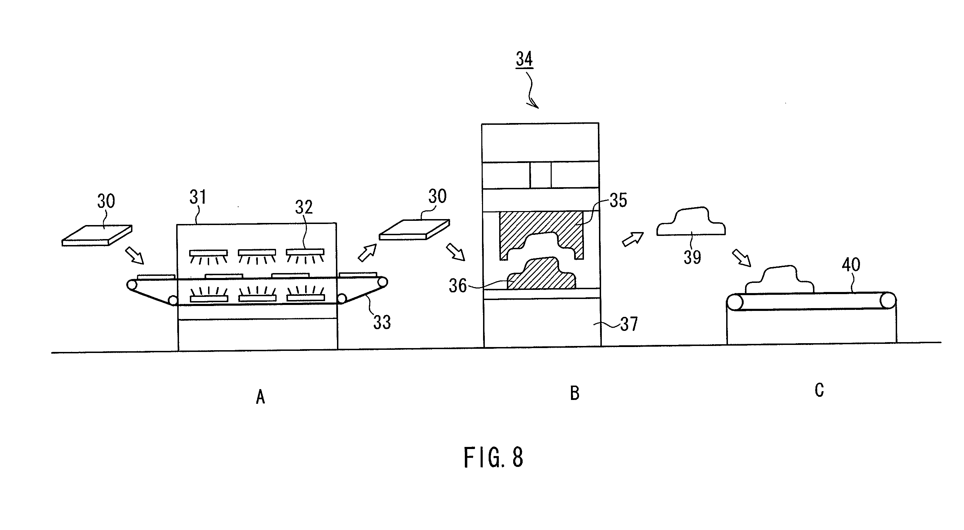

FIGs. 8A to 8C are cross-sectional views showing an exemplary compression molding process for manufacturing an interior material for a vehicle using the fiber-reinforced resin molded article of the present invention. Initially, as shown in FIG. 8A, a fiber-reinforced resin molded article 30 cut into predetermined sizes is supplied to a furnace 31 on a conveyer 33. The furnace 31 is heated to a predetermined temperature by infrared heaters 32 as heat sources, allowing the fiber-reinforced resin molded article 30 to be heated and softened. Then, as shown in FIG. 8B, the preheated fiber-reinforced resin molded article 30 is arranged between an upper mold 35 and a lower mold 36 of a compression molding machine 34. Both the upper mold 35 and the lower mold 36 also are maintained at a predetermined temperature. As a pressing device 37 is raised, the fiber-reinforced resin molded article 30 is formed into a predetermined shape between the upper mold 35 and the lower mold 36, resulting in a molded product 39. Then, as shown in FIG. 8C, while the molded product 39 removed from the compression molding machine 34 is cooled on a conveyer 40, the process proceeds to a subsequent step.

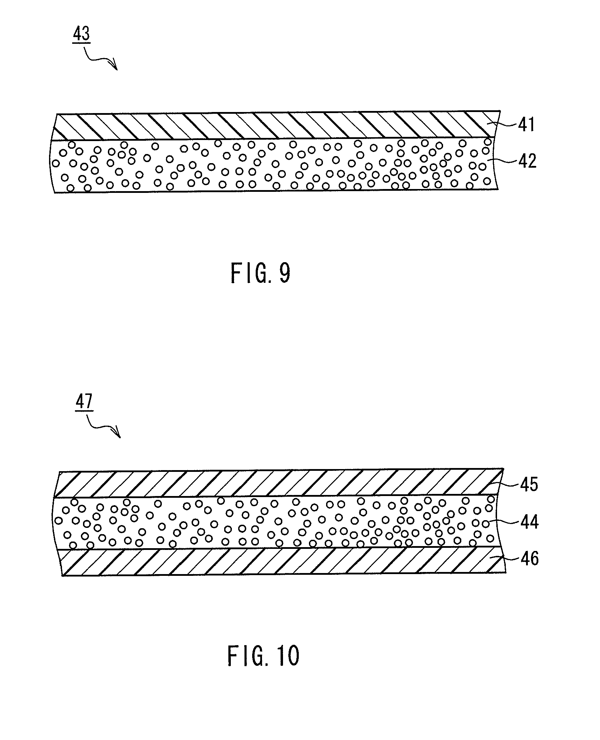

FIG. 9 is a cross-sectional view of a fiber-reinforced resin molded article 43 in an example of the present invention. This molded article includes a sheet 41 for a fiber-reinforced resin and a resin foam sheet 42 that adheres to one side of the sheet 41 by compression molding. In other words, the sheet 41 for a fiber-reinforced resin and the resin foam sheet 42 are molded integrally by compression molding. A coating material may adhere to a surface of the resin foam sheet 42. FIG. 10 is a cross-sectional view of a fiber-reinforced resin molded article 47 in another example of the present invention. This molded article includes a resin foam sheet 44 and sheets 45 and 46 for a fiber-reinforced resin that respectively adhere integrally to both sides of the resin foam sheet 44 by compression molding. For example, if the molded article is for use as an interior material for a vehicle, a coating material may adhere to a surface of the resin foam sheet 44. In addition, a back coating material also can adhere to a surface on a side opposite to the coating material. The coating material and the back coating material can adhere concurrently during the compression molding. Further, the coating material and the back coating material may be resin foam sheets that adhere integrally to both sides of the sheet for a fiber-reinforced resin by compression molding.

### Examples

Hereinafter, the present invention will be described specifically by way of examples. The present invention is not limited to the following examples.

### (Example 1)

In the present example, the core-sheath type conjugate fiber 10 as a filament yarn as shown in FIG. 1A was used. The conjugate fiber 10 was made of polypropylene (PP) having a melting point of 172°C as the core component 11 and polyethylene (PE) having a melting point of 122°C as the sheath component 12 therearound. The weight ratio between PP and PE was as follows: PP/PE = 65/35. The conjugate fiber 10 had an elastic modulus of 11 GPa and a strength of 820 MPa. The 240 conjugate fibers 10 were aligned in parallel to form a multifilament having a total fineness of 1850 dtex.

The obtained 16 multifilaments were arranged per inch in one direction to form a monolayer and bound with a stitching yarn (fineness: 380 dtex) as shown in FIG. 2. The stitching yarn was a core-sheath type conjugate fiber yarn as a filament yarn as shown in FIG. 1A, which was composed of polypropylene (PP) having a melting point of 172°C as a core component and polyethylene (PE) having a melting point of 122°C as a sheath component therearound at a mass ratio (weight ratio) between PP and PE of PP/PE = 65/35. A reed screen-like sheet thus obtained had a mass per unit area of 116.5 g/m².

The thus-obtained 4 reed screen-like sheets were stacked in the same direction, followed by compression molding as shown in FIG. 6. The compression molding was performed under the following conditions: the temperature was 130°C, the compression pressure was 1 MPa, and the molding time was 5 minutes. From a molded article thus obtained, a dumbbell specimen No. 1 and a rectangular specimen having a thickness of 0.6 mm were cut out so as to be subjected to a tensile test. As a result, the specimens had an elastic modulus of 8.2 GPa and a strength of 215 MPa. The tensile test was performed according to JIS K 7054:1995. However, regarding the specimen configuration, a B-type specimen (entire length: 200 mm) according to JIS K 7054 was used with respect to the elastic modulus, and a dumbbell specimen No. 1 according to JIS K 6251:2004 was used with respect to the tensile strength.

The thus-obtained 8 reed screen-like sheets were stacked in the same direction, followed by compression molding in the same manner. From a molded article thus obtained, a specimen for a bending test having a thickness of 1.2 mm was cut out so as to be subjected to a bending test. As s result, the specimen had an elastic modulus of 7.6 GPa and a strength of 97 MPa. The bending test was performed based on a three-point bending test according to JIS K 7055:1995.

Table 1 shows the above-described results. In Table 1, Vf represents a volume percentage of the reinforcing fiber, and Wf represents a mass percentage of the reinforcing fiber.

Table 1 also includes the following data by way of comparison.
Conventional Example 1: values in the document about SMC (sheet molding compound press molding method) ("FRP easy enough for anyone to use -introduction to FRP" edited by Hideaki KASANO, The Japan Reinforced Plastics Society, September 12, 2002, page 68, data in Table 3.30)
Conventional Example 2: values in the catalog of GMT (sheet composite material made of continuous glass fiber-reinforced thermoplastic resin (polypropylene)) (data on general purpose product "UNISHEET P-grade" (product name) P4038-BK31 available on the website of Quadrant Plastic Composite Japan Ltd.)

**[Table 1]**

| | Example 1 | Conventional Example 1 (SMC) | Conventional Example 2 (GMT) |
|---|---|---|---|
| Vf (%) of reinforcing fiber | 65 | 13 | 25 |
| Wf(%) of reinforcing fiber | 65 | 30 | 40 |
| Tensile elastic modulus (GPa) | 8.2 | 11.0 | - |
| Tensile strength (MPa) | 215 | 90 | 80 |
| Bending elastic modulus (GPa) | 7.6 | 10.5 | 5.3 |
| Bending strength (MPa) | 97 | 180 | 160 |

As is evident from Table 1, in Example 1, a higher proportion of the reinforcing fiber was included, so that a higher tensile strength was obtained, and other physical properties were also in balance, as compared with the prior art SMC and GMT.

### (Example 2)

An experiment was performed on stitching yarns. The 2 reed screen-like sheets manufactured in Example 1 were laminated at an angle of 90° to form a biaxial substrate. Alaminate of the 2 biaxial substrates stacked to form symmetrical angles was used to form a tensile test specimen. Alaminate of the 4 biaxial substrates stacked to form symmetrical angles was used to form a bending test specimen. The following stitching yarns were used: a PP filament yarn (fineness: 380 dtex, number of filaments: 60) in Experiment No. 1, a conjugate fiber yarn composed of PP as a core component and PE as a sheath component (mass ratio: PP/PE = 50/50, fineness: 380 dtex, number of filaments: 60) in Experiment No. 2, and a polyester-based filament yarn ("Tetoron" (product name) manufactured by Teijin, Ltd., fineness: 80 dtex) in Experiment No. 3. The yarns in Experiments No.1 and No. 2 had a fineness higher than that in Experiment No. 3 because it was impossible to set a yarn having a lower fineness in a sewing machine. In each of Experiments No. 1 to No. 3, the sheet had a mass per unit area of 116.5 g/m² per layer, the 4-layer sheet product for forming a tensile test specimen had a mass per unit area of 466 g/m², and the 8-layer sheet product for forming a bending test specimen had a mass per unit area of 932 g/m². The molded article for use as a tensile test specimen had a thickness of about 1.2 mm, and the molded article for use as a bending test specimen had a thickness of about 2.3 mm. Compression molding was performed under the following conditions: the temperature was 130°C, the molding pressures were 2 and 4 MPa, and the molding time was 5 minutes.

Table 2 shows the above-described results.

**[Table 2]**

| Experiment No. (stitching yarn) | Experiment No.1 (PP) | | Experiment No. 2 (PP/PE) | | Experiment No. 3 (PET) | |
|---|---|---|---|---|---|---|
| Molding pressure | 2 MPa | 4MPa | 2 MPa | 4MPa | 2 MPa | 4MPa |
| Tensile elastic modulus (GPa) | 6.9 | 6.7 | 7.0 | 6.8 | 5.8 | 5.5 |
| Tensile strength (MPa) | 153.3 | 151.9 | 143.7 | 153.1 | 146.6 | 150.0 |
| Bending elastic modulus (GPa) | 3.1 | 3.3 | 3.3 | 3.4 | 3.2 | 3.4 |
| Bending strength (MPa) | 50.1 | 50.5 | 49.2 | 50.1 | 47.6 | 49.2 |

As can be seen from Table 2, when the polyester-based filament yarn in Experiment No. 3 was used as a stitching yarn, almost the same results as in Experiments No. 1 and No. 2 were obtained except that the tensile elastic modulus was slightly lower. However, appearance observations made after the bending test showed that the molded article in Experiment No. 3 was destroyed partially around the stitching yarn in the vicinity of a pressure fulcrum. On the other hand, the molded articles in Experiments No. 1 and No. 2 were not destroyed around the stitching yarns. This revealed that it was preferable to use the stitching yarn composed of a thermoplastic synthetic fiber of the same type as the reinforcing fiber and the matrix resin.

### (Example 3)

An experiment was performed on molding pressures. The 2 reed screen-like sheets manufactured in Example 1 were laminated at an angle of 90° to form a biaxial substrate. A laminate of the 2 biaxial substrates stacked to form symmetrical angles was used to form a tensile test specimen. A laminate of the 4 biaxial substrates stacked to form symmetrical angles was used to form a bending test specimen. The same stitching yarn as in Example 1 was used. Compression molding was performed under the following conditions: the temperature was 130°C, the molding pressures were 1 to 8 MPa, and the molding time was 5 minutes.

Table 3 shows the above-described results.

**[Table 3]**

| Molding pressure | 1 MPa | 2 MPa | 4MPa | 8MPa |
|---|---|---|---|---|
| Tensile elastic modulus (GPa) | 5.7 | 5.8 | 5.5 | 4.8 |
| Tensile strength (MPa) | 149 | 147 | 150 | 132 |
| Bending elastic modulus (GPa) | 3.1 | 3.2 | 3.4 | 2.5 |
| Bending strength (MPa) | 42.1 | 47.6 | 49.2 | 47.7 |

As can be seen from Table 3, the molding pressure was preferably 1 to 8 MPa and more preferably about 2 to 4 MPa. It should be noted that this experiment was performed with the biaxial substrate obtained by laminating the 2 reed screen-like sheets at an angle of 90°. Thus, in the case of using a multiaxial warp knitted fabric or laminating a foam sheet, it is presumed that the preferable range varies.

### (Example A1)

The core-sheath type conjugate fiber 10 as a filament yarn as shown in FIG. 1 was used. The conjugate fiber 10 was made of polypropylene (PP) having a melting point of 172°C as the core component 11 and polyethylene (PE) having a melting point of 122°C as the sheath component 12 therearound. The weight ratio between PP and PE was as follows: PP/PE = 65/35. The conjugate fiber had an elastic modulus of 8 GPa and a strength of 530 MPa. The 240 core-sheath type fibers were aligned in parallel to form a multifilament having a total fineness of 1850 dtex.

The obtained 10 multifilaments were arranged per inch in one direction to form a monolayer and bound with a stitching yarn (fineness: 190 dtex) as shown in FIG. 2. The stitching yarn was composed of polypropylene (PP) (fineness:190 dtex). Then, 3 one-way sheets thus obtained were laminated such that each of the multifilament yarns formed an angle of 60°, thereby forming a triaxial substrate. The stitching yarn was composed of polypropylene (PP) (fineness:190 dtex). A sheet thus obtained was allowed to pass between the pair of pressure heating rollers (temperature: 130°C, pressure: 1 MPa) shown in FIG. 4 at a speed of 1 m/min. A sheet (triaxial warp knitted fabric) for a fiber-reinforced resin thus obtained had a mass per unit area of 218.5 g/m² and a thickness at a point of intersection of 1.5 mm.

### (Example A2)

A sheet for a fiber-reinforced resin was obtained in the same manner as in Example A1 except that the sheet had a mass per unit area of 175 g/m² and a thickness at a point of intersection of 1.5 mm.

### (Example A3)

A sheet for a fiber-reinforced resin was obtained in the same manner as in Example A1 except that the sheet had a mass per unit area of 131 g/m² and a thickness at a point of intersection of 1.5 mm.

### (Example B1)

The sheet for a fiber-reinforced resin obtained in Example A1 was arranged on both sides of a polypropylene resin foam sheet (expansion ratio: 15 times, thickness: 5 mm), and they were subjected to compression molding within molds so as to be integrated as shown in FIGs. 7Ato 7C, resulting in a fiber-reinforced resin molded article having a thickness of 4.5 mm. The compression molding was performed under the following conditions. The hot pressing was performed at a temperature of 130°C and a molding pressure of 1 MPa for a molding time of 30 seconds, and the cold pressing was performed at a temperature of 20°C and a molding pressure of 1 MPa for a molding time of 5 minutes.

### (Example B2)

A fiber-reinforced resin molded article was obtained in the same manner as in Example B1 except that a polypropylene resin foam sheet (expansion ratio: 15 times, thickness: 3.0 mm) was used as a resin foam sheet, and the fiber-reinforced resin molded article to be obtained was adjusted to have a thickness of 3.0 mm.

### (Example B3)

A fiber-reinforced resin molded article was obtained in the same manner as in Example B1 except that a polypropylene resin foam sheet (expansion ratio: 15 times, thickness: 3.0 mm) was used as a resin foam sheet, and the fiber-reinforced resin molded article to be obtained was adjusted to have a thickness of 2.7 mm.

### (Example B4)

A fiber-reinforced resin molded article having a thickness of 4.5 mm was obtained in the same manner as in Example B1 except that a polypropylene resin foam sheet (expansion ratio: 30 times, thickness: 5 mm) was used as a resin foam sheet.

### (Example B5)

A fiber-reinforced resin molded article was obtained in the same manner as in Example B4 except that a polypropylene resin foam sheet (expansion ratio: 30 times, thickness: 3.0 mm) was used as a resin foam sheet, and the fiber-reinforced resin molded article to be obtained was adjusted to have a thickness of 3.0 mm.

### (Example B6)

A fiber-reinforced resin molded article was obtained in the same manner as in Example B4 except that a polypropylene resin foam sheet (expansion ratio: 30 times, thickness: 3.0 mm) was used as a resin foam sheet, and the fiber-reinforced resin molded article to be obtained was adjusted to have a thickness of 2.7 mm.

### (Example B7)

A fiber-reinforced resin molded article having a thickness of 4.5 mm was obtained in the same manner as in Example B1 except that a polypropylene resin foam sheet (expansion ratio: 45 times, thickness: 5 mm) was used as a resin foam sheet.

### (Example B8)

A fiber-reinforced resin molded article was obtained in the same manner as in Example B7 except that a polypropylene resin foam sheet (expansion ratio: 45 times, thickness: 3.0 mm) was used as a resin foam sheet, and the fiber-reinforced resin molded article to be obtained was adjusted to have a thickness of 3.0 mm.

### (Example B9)

A fiber-reinforced resin molded article was obtained in the same manner as in Example B7 except that a polypropylene resin foam sheet (expansion ratio: 45 times, thickness: 3.0 mm) was used as a resin foam sheet, and the fiber-reinforced resin molded article was adjusted to have a thickness of 2.7 mm.

### (Example B10)

A fiber-reinforced resin molded article having a thickness of 4.5 mm was obtained in the same manner as in Example B1 except that the sheet for a fiber-reinforced resin in Example A2 was used.

### (Example B11)

A fiber-reinforced resin molded article was obtained in the same manner as in Example B10 except that a polypropylene resin foam sheet (expansion ratio:15 times, thickness: 3.0 mm) was used as a resin foam sheet, and the fiber-reinforced resin molded article to be obtained was adjusted to have a thickness of 3.0 mm.

### (Example B12)

A fiber-reinforced resin molded article was obtained in the same manner as in Example B10 except that a polypropylene resin foam sheet (expansion ratio: 15 times, thickness: 3.0 mm) was used as a resin foam sheet, and the fiber-reinforced resin molded article to be obtained was adjusted to have a thickness of 2.7 mm.

### (Example B13)

A fiber-reinforced resin molded article having a thickness of 4.5 mm was obtained in the same manner as in Example B10 except that a polypropylene resin foam sheet (expansion ratio: 30 times, thickness: 5 mm) was used as a resin foam sheet.

### (Example B14)

A fiber-reinforced resin molded article was obtained in the same manner as in Example B13 except that a polypropylene resin foam sheet (expansion ratio: 30 times, thickness: 3.0 mm) was used as a resin foam sheet, and the fiber-reinforced resin molded article to be obtained was adjusted to have a thickness of 3.0 mm.

### (Example B15)

A fiber-reinforced resin molded article was obtained in the same manner as in Example B13 except that a polypropylene resin foam sheet (expansion ratio: 30 times, thickness: 3.0 mm) was used as a resin foam sheet, and the fiber-reinforced resin molded article to be obtained was adjusted to have a thickness of 2.7 mm.

### (Example B16)

Afiber-reinforced resin molded article having a thickness of 4.5 mm was obtained in the same manner as in Example B10 except that a polypropylene resin foam sheet (expansion ratio: 45 times, thickness: 5 mm) was used as a resin foam sheet.

### (Example B17)

A fiber-reinforced resin molded article was obtained in the same manner as in Example B16 except that a polypropylene resin foam sheet (expansion ratio: 45 times, thickness: 3.0 mm) was used as a resin foam sheet, and the fiber-reinforced resin molded article to be obtained was adjusted to have a thickness of 3.0 mm.

### (Example B18)

A fiber-reinforced resin molded article was obtained in the same manner as in Example B16 except that a polypropylene resin foam sheet (expansion ratio: 45 times, thickness: 3.0 mm) was used as a resin foam sheet, and the fiber-reinforced resin molded article to be obtained was adjusted to have a thickness of 2.7 mm.

### (Example B19)

A fiber-reinforced resin molded article having a thickness of 4.5 mm was obtained in the same manner as in Example B1 except that the sheet for a fiber-reinforced resin in Example A3 was used.

### (Example B 20)

A fiber-reinforced resin molded article was obtained in the same manner as in Example B19 except that a polypropylene resin foam sheet (expansion ratio: 15 times, thickness: 3.0 mm) was used as a resin foam sheet, and the fiber-reinforced resin molded article to be obtained was adjusted to have a thickness of 2.7 mm.

### (Example B21)

A fiber-reinforced resin molded article having a thickness of 4.5 mm was obtained in the same manner as in Example B19 except that a polypropylene resin foam sheet (expansion ratio: 30 times, thickness: 5.0 mm) was used as a resin foam sheet.

### (Example B22)

A fiber-reinforced resin molded article having a thickness of 4.5 mm was obtained in the same manner as in Example B19 except that a polypropylene resin foam sheet (expansion ratio: 45 times, thickness: 5 mm) was used as a resin foam sheet.

### (Comparative Examples 1 and 2)

Comparative Example 1 relates to a current injection molded product of polypropylene (PP), and Comparative Example 2 relates to a composite molded product of a glass fiber and a polypropylene resin.

Regarding each of the molded articles in Examples B1 to B22 and Comparative Examples 1 and 2, the bending elastic gradient was measured as follows. The results are shown in Table 4 below. Table 4 also shows the thickness and the mass per unit area of each of the molded articles obtained after the compression molding.

### (Bending elastic gradient)

The bending elastic gradient refers to a resistance to a load applied in a thickness direction, and was measured as follows. Initially, a three-point bending test was performed on a specimen having a width of 50 mm and a length of 150 mm according to JIS K 7221-2 at a test rate of 50 mm/min with a span length of 100 mm. Then, using a load (N)-deflection (cm) curve thus obtained, the elastic gradient (N/cm) was calculated from a tangent to the curve at a point where the curve had the largest gradient.

**[Table 4]**

| Example | B1 | B2 | B3 | B4 | B5 | B6 | B7 | B8 | B9 |
|---|---|---|---|---|---|---|---|---|---|
| Thickness (mm) of molded article | 4.5 | 3.0 | 2.7 | 4.5 | 3.0 | 2.7 | 4.5 | 3.0 | 2.7 |
| Mass per unit area (g/m²) | 786 | 616 | 616 | 586 | 526 | 526 | 536 | 496 | 496 |
| Bending elastic gradient (N/cm) | 141.8 | 65.1 | 53.4 | 104.9 | 54.0 | 42.0 | 84.8 | 45.3 | 37.3 |
| Example | B10 | B11 | B12 | B13 | B14 | B15 | B16 | B17 | B18 |
| Thickness (mm) of molded article | 4.5 | 3.0 | 2.7 | 4.5 | 3.0 | 2.7 | 4.5 | 3.0 | 2.7 |
| Mass per unit area (g/m2) | 650 | 530 | 530 | 500 | 440 | 440 | 450 | 410 | 410 |
| Bending elastic gradient (N/cm) | 117.8 | 53.2 | 44.7 | 86.8 | 43.8 | 36.8 | 71.2 | 38.1 | 32.7 |
| Example | B19 | B20 | B21 | B22 | Comparative Example | | | 1 | 2 |
| Thickness (mm) of molded article | 4.5 | 2.7 | 4.5 | 4.5 | Thickness (mm) of molded article | | | 2.8 | 2.9 |
| Mass per unit area (g/m²) | 562 | 442 | 412 | 362 | Mass per unit area (g/m²) | | | 2300 | 980 |
| Bending elastic gradient (N/cm) | 94.2 | 33.7 | 75.0 | 59.7 | Bending elastic gradient (N/cm) | | | 30.0 | 79.1 |

As is evident from Table 4, it was confirmed that each of the products in the examples of the present invention had a low mass per unit area and a high bending elastic gradient. In particular, it was found to be possible to achieve a mass per unit area of 1 kg/m² or less and a bending elastic gradient of 30 N/cm or more. This data shows that the products in the examples of the present invention are lightweight and less likely to be deformed, ensuring that they have properties suitable for an interior material for a vehicle.

### Industrial Applicability

The sheet for a fiber-reinforced resin and the fiber-reinforced resin molded article using the same according to the present invention are suitable as interior materials for automobiles, vehicles, ships, houses, and the like.

### Explanation of Letters or Numerals

- 1a-1f: Conjugate yarn for fiber-reinforced resin
- 6: Knitting needle
- 7, 8: Stitching yarn
- 9: Multiaxial warp knitted fabric
- 10, 13, 16: Conjugate fiber
- 11: Core component
- 12: Sheath component
- 14, 17: Island component
- 15, 18: Sea component
- 20: Reed screen-like sheet
- 21: Conjugate fiber
- 22: Stitching yarn
- 23: Roll formed sheet
- 24, 25: Pressure roller
- 41, 45, 46, 52, 54, 81a-81d: Sheet for fiber-reinforced resin
- 31: Furnace
- 32: Infrared heater
- 33, 40: Conveyer
- 34: Compression molding machine
- 35, 55: Upper mold
- 36, 51: Lower mold
- 37: Pressing device
- 39: Molded product
- 42, 44, 53: Resin foam sheet
- 30, 43, 47, 70, 90: Fiber-reinforced resin molded article
- 60, 80: Laminate

## Claims

1. A sheet for a fiber-reinforced resin comprising a conjugate fiber yarn that contains a low melting point polymer component of a thermoplastic synthetic resin and a high melting point polymer component of a thermoplastic synthetic resin,
wherein the low melting point polymer component and the high melting point polymer component are polymers of the same type,
when the sheet is formed into a fiber-reinforced resin molded article, the low melting point polymer component serves as a matrix resin, while the high melting point polymer component serves as a reinforcing fiber, and
the sheet is arranged in at least one direction to form a monolayer or a multilayer.

2. The sheet for a fiber-reinforced resin according to claim 1, wherein a stitching yarn is used to connect the sheet for a fiber-reinforced resin.

3. The sheet for a fiber-reinforced resin according to claim 1 or 2, wherein the conjugate fiber contains the high melting point polymer component in a range of 50 to 90 mass% and the low melting point polymer component in a range of 10 to 50 mass%.

4. The sheet for a fiber-reinforced resin according to any one of claims 1 to 3, wherein a difference in melting point between the low melting point polymer component and the high melting point polymer component is 30°C or more.

5. The sheet for a fiber-reinforced resin according to any one of claims 1 to 4, wherein both the low melting point polymer component and the high melting point polymer component of the conjugate fiber are at least one selected from polyolefin and an olefin copolymer.

6. The sheet for a fiber-reinforced resin according to any one of claims 1 to 5, wherein the high melting point polymer component of the conjugate fiber is polypropylene, and the low melting point polymer component is polyethylene.

7. The sheet for a fiber-reinforced resin according to any one of claims 1 to 6, being a reed screen-like sheet or a multiaxial warp knitted fabric.

8. The sheet for a fiber-reinforced resin according to any one of claims 1 to 7, wherein the stitching yarn is composed of the same type of polymer as the low melting point polymer component and the high melting point polymer component.

9. The sheet for a fiber-reinforced resin according to any one of claims 1 to 8, being subjected to heat and pressure molding at a temperature equal to or higher than the melting point of the low melting point polymer component and lower than the melting point of the high melting point polymer component.

10. A fiber-reinforced resin molded article obtained by subjecting the sheet for a fiber-reinforced resin according to any one of claims 1 to 9 to heat and pressure molding at a temperature equal to or higher than the melting point of the low melting point polymer component and lower than the melting point of the high melting point polymer component.

11. The fiber-reinforced resin molded article according to claim 10, obtained by allowing the sheet for a fiber-reinforced resin to adhere to a resin foam sheet, followed by compression molding.

12. The fiber-reinforced resin molded article according to claim 11, wherein the resin foam sheet is a polyurethane or polyolefin foam sheet.
